# EUROPÄISCHE PATENTANMELDUNG

(11) **EP 4 596 208 A1**
(43) Veröffentlichungstag der Anmeldung: **06.08.2025**
(21) Anmeldenummer: 24154984.9
(22) Anmeldetag: 31.01.2024
(51) Int. Cl.: B29C 44/12, B29C 44/34, B29C 59/16, B29C 35/08, B29C 44/42

(54) **VERFAHREN ZUR HERSTELLUNG EINES VERBUNDBAUTEILS MIT EINEM THERMOPLASTKÖRPER UND MIT EINEM GESCHÄUMTEN SILIKONKÖRPER**

(71) Anmelder: Universität Kassel (Körperschaft d. öffentlichen Rechts), 34125 Kassel (DE)
(72) Erfinder: Giesen, Ralf-Urs, 34323 Malsfeld (DE); Heim, Hans-Peter, 33332 Gütersloh (DE); Marl, Svenja, 34128 Kassel (DE); Klier, Kevin, 34323 Malsfeld (DE); Nikousaleh, Mohammad Ali, 34117 Kassel (DE); Hartung, Michael, 34593 Knüllwald (DE)
(74) Vertreter: Walther Bayer Faber Patentanwälte PartGmbB

(57) **Zusammenfassung**

Die Erfindung betrifft ein Verfahren zur Herstellung eines Verbundbauteils (1) mit einem Thermoplastkörper (10) und mit einem Silikonkörper (11), wobei der Silikonkörper (11) mittels eines Gießvorganges, eines Extrusionsvorganges und/oder eines Pressvorganges verarbeitet wird, wobei das Verfahren wenigstens die folgenden Schritte aufweist:
- Bereitstellen des Thermoplastkörpers (10);
- Bereitstellen von Silikonkautschuk (12);
- Einbringen (100) eines Treibmittels (13) in den Silikonkautschuk (12);
- Aufbringen (110) des Silikonkautschukes (12) mit dem Treibmittel (13) auf eine Oberfläche (14) des Thermoplastkörpers (10), wobei die folgenden Vorgänge mit dem Aufbringen (110) gleichzeitig erfolgen:
a) Aufschäumen (120) des Silikonkautschukes (13) mit dem Treibmittel (13) auf der Oberfläche (14) des Thermoplastkörpers (10),
b) Vernetzen (130) des Silikonkautschukes (12) zu einem Silikonelastomer (15),
c) Formgeben (140) des Silikonelastomers (15) und
d) Anhaften (150) des Silikonelastomers (15) auf der Oberfläche (14), sodass

ein Silikonkörper (11) mit geschäumter Struktur und definierter Form auf der Oberfläche des Thermoplastkörpers (10) gebildet wird. Die Erfindung betrifft ferner ein so hergestelltes Verbundbauteil (1), insbesondere einen Behälter (17) oder einen Handgriff (19).

## Beschreibung

Die Erfindung betrifft ein Verfahren zur Herstellung eines Verbundbauteils mit einem Thermoplastkörper und mit einem Silikonkörper, wobei der Silikonkörper mittels eines Gießvorganges, eines Extrusionsvorganges und/oder eines Pressvorganges verarbeitet wird. Die Erfindung richtet sich ferner auf ein Verbundbauteil, das hergestellt ist mit einem solchen Verfahren.

### STAND DER TECHNIK

Die CN 212528951 U offenbart einen Flächenkörper mit einer TPO-Schicht (thermoplastisches Polyolefin), eine Silikonkautschuk-Schaumschicht und ein Nylon-Netzgewebe. Beispielsweise ist der Flächenkörper einsetzbar als Automobil-Innenverkleidung. Dabei ist angegeben, dass die mehreren Schichten miteinander verklebt werden. Insofern wird zusätzlich zur Herstellung der Komponenten wenigstens ein weiterer Prozessschritt für das Kleben erforderlich.

Aus der JP 2010042539 A2 ist die Bereitstellung einer weichen, geschäumten Folie bekannt, die elastisch ausgebildet ist und eine hohe Zugfestigkeit aufweist. Dafür wird ein Vliesstoff bereitgestellt, der mit der weich geschäumten Folie kombiniert wird, indem ein Vliesstoff, der aus einer thermoplastischen, elastischen Faser besteht, auf einen folienförmigen, modifizierten, silikonharz-geschäumten Weichkörper geschichtet wird und der Vliesstoff in den modifizierten, silikongeschäumten Weichkörper eingebettet wird. Auch hier wird eine elastische Thermoplastfasermatte auf einen Silikonschaum geklebt, da bei alternativen Prozessen, beispielsweise einem Anspritzen des Silikonschaums an den Vlies, das Vlies im Harz eingetaucht werden müsste.

Auch mit den weiteren Druckschriften US 2008 073 465 A, der US 472 85 67 A und der US 2003 213 939 A sind Verbünde aus Silikonschaum und weiteren Bauteilen bekannt, die jeweils eine Klebetechnik zur Verbindung der beiden Körper zu einem Verbundbauteil erfordern.

Aus der DE 10 2015 010 380 A1 ist ein Spritzgussverfahren zur Verarbeitung von Flüssig- oder Feststoffsilikon bekannt, wobei dem Flüssig- oder Feststoffsilikon vor Einspritzen des Flüssig- oder Feststoffsilikons in die Werkstückform ein unter Wärme expandierbarer Füllstoff zugegeben wird, wobei vor dem Einspritzvorgang die Werkstückform das Gemisch aus Flüssig- oder Feststoffsilikon und unter Wärme expandierbarem Füllstoff unterhalb der Vulkanisationstemperatur und unterhalb der Expansionstemperatur des Füllstoffes gehalten wird. Nach dem Befüllen der Werkstückform erfolgt eine Erwärmung des Gemisches auf die Vulkanisationstemperatur des Flüssig- oder Feststoffsilikons.

Bekannt ist aus dem Stand der Technik gemäß der EP 1 749 644 A1 ein Verfahren zur Herstellung von Kunststoffteilen, und hier insbesondere Kunststoffprofilen, bei denen Pulver oder Füllstoffe in ein granulatförmiges thermoplastisches Kohlenstoffmaterial eingebracht werden, diese Mischung erwärmt wird, und in Kunststoffteile geformt wird. Das thermoplastische Kohlenstoffmaterial ist verhältnismäßig teuer, weshalb man bestrebt ist, den Anteil an thermoplastischem Kohlenstoffmaterial in Bezug auf das jeweilige Werkstück zu reduzieren. Zu diesem Zweck ist der Einsatz von Füllstoffen bekannt, und hier insbesondere der Einsatz von sogenannten Mikrosphären. Mikrosphären sind aus dem Stand der Technik hinreichend bekannt, und beispielsweise bei "AkzoNobel" unter der Bezeichnung "Expancel "Mikrosphären käuflich zu erwerben. Bei solchen Mikrosphären handelt es sich um sphärische Kunststoffkugeln, die aus einer Polymerhülle bestehen, in die ein Gas eingekapselt ist. Durch Erwärmung erhöht sich der Gasdruck im Inneren der Hülle, die gleichzeitig aufgrund der Wärme aufweicht, was zu einer Volumenvergrößerung solcher Mikrosphären führt. Das Treibgas bleibt hierbei allerdings dauerhaft eingeschlossen. Aus der bereits zuvor genannten EP 1 749 644 A1 ist nun bekannt, ein Gemisch aus thermoplastischem Kohlenmaterial und dem zuvor beschriebenen Mikrosphären im Spritzgussverfahren zu verarbeiten. Beim Spritzgussverfahren wird das Gemisch aus thermoplastischem Kohlenstoffmaterial und dem Füllstoff in Form von Mikrosphären durch eine Plastifiziereinheit durch eine Düse in eine Werkstückform gegeben. Die EP 1 749 644 geht nun davon aus, dass die Mikrosphären bereits innerhalb der Plastifiziereinheit aufgrund der dort herrschenden Temperaturen ihr Volumen vergrößern bzw. sogar in Bezug auf die Teilchengröße den vorgesehenen Endzustand erreichen.

Ähnliches wird auch in Bezug auf die Herstellung von Kunststoffteilen im Extrusionsverfahren beschrieben. Das heißt zusammengefasst, dass man bei der Abfassung der EP 1 749 644 A1 davon ausgegangen ist, dass die Mikrosphären bereits in der Plastifiziereinheit bzw. dem Extruder expandieren sollen.

Aus der EP 0 186 493 B1 ist die Herstellung eines Kautschukverbundmaterials als Stoßdämpferwerkstoff beschrieben, wobei ein Gemisch aus Silikonkautschuk und Mikrosphären vorgesehen ist, wobei die Mikrosphären bereits im expandierten Zustand dem Silikonkautschuk vor der weiteren Verarbeitung, insbesondere in der nachfolgenden Vulkanisation, beigemischt werden.

Die DE 10 2016 005 111 A1 offenbart ein Verfahren zum physikalischen Schäumen von Silikonkautschukkörpern mittels Flüssigsilikonkautschuk, wobei vorgesehen ist, dass eine Zugabe von Wasser in den Flüssigsilikonkautschuk unter Bildung einer Emulsion erfolgt, anschließend wird die Emulsion an eine Extrudereinheit zugeführt, und es erfolgt ein Erwärmen der Emulsion in der Extrudereinheit bis unter eine Verdampfungstemperatur des Wassers, anschließend erfolgt ein Einspritzen der Emulsion in ein Werkzeug unter Vulkanisation des Flüssigsilikonkautschukes, unter Erhitzung des Wassers über eine Verdampfungstemperatur des Wassers und unter Aufschäumung eines formstabilen Silikonkautschukkörpers. Auf diese Weise kann ein Silikonschaum aus einem Silikonelastomer hergestellt werden.

Schließlich offenbart die DE 10 2021 119 977 A1 die Verwendung eines Silikonkautschukgemisches zur Herstellung von Silikonkautschukbauteilen im Extrusionsverfahren, wobei das Silikonkautschukgemisch im Gemisch verteilt eine Emulsion mit Wasser aufweist, wobei das Silikonkautschukgemisch zur Formgebung einem Extruder zugeführt wird, und wobei das Silikonkautschukgemisch nach Verlassen des Extruders als Rohbauteil eine Materialquerschnittsfläche von weniger als 1400 mm, vorzugsweise von weniger als 1200 mm oder eine Materialdicke von 50 mm oder vorzugsweise von 40 mm aufweist, wobei zum Zwecke der schockartigen Verdampfung des Wassers der Emulsion das Rohbauteil, in Abhängigkeit von der Größe der Querschnittsfläche, in einem Tunnelofen mit zwei Abschnitten in einem ersten Abschnitt über einen Zeitraum von 10 bis 110 Sekunden, vorzugsweise über einen Zeitraum von 20 bis 90 Sekunden, einer Temperatur von mindestens 90°C bis 300°C, vorzugsweise von 180°C bis 250°C, ausgesetzt ist. So kann auch Wasser als Treibmittel dienen.

### OFFENBARUNG DER ERFINDUNG

Aufgabe der Erfindung ist die Schaffung eines Verbundbauteils mit einem Thermoplastkörper und mit einem Silikonkörper, wobei das Verfahren möglichst wenig Verfahrensschritte umfassen soll, insbesondere soll die Verwendung weiterer Stoffe, insbesondere Klebemittel, vermieden werden, die prozessbegleitend oder als singulärer Prozessschritt separat zugegeben werden müssen. Auch soll der Silikonkörper über ein Vollmaterial hinausgehende weitere Eigenschaften aufweisen.

Diese Aufgabe wird ausgehend von einem Verfahren gemäß dem Oberbegriff des Anspruchs 1 und ausgehend von einem Verbundbauteil gemäß Anspruch 12 mit den jeweils kennzeichnenden Merkmalen gelöst. Vorteilhafte Weiterbildungen der Erfindung sind in den abhängigen Ansprüchen angegeben.

Das erfindungsgemäße Verfahren umfasst wenigstens die folgenden weiteren Schritte: Bereitstellen des Thermoplastkörpers; Bereitstellen von Silikonkautschuk; Einbringen eines Treibmittels in den Silikonkautschuk; Aufbringen des Silikonkautschukes mit dem Treibmittel auf eine Oberfläche des Thermoplastkörpers, wobei die folgenden Vorgänge mit dem Aufbringen gleichzeitig erfolgen: Aufschäumen des Silikonkautschukes mit dem Treibmittel auf der Oberfläche des Thermoplastkörpers, Vernetzen des Silikonkautschukes zu einem Silikonelastomer, Formgeben des Silikonelastomers und Anhaften des Silikonelastomers auf der Oberfläche, sodass ein Silikonkörper mit geschäumter Struktur und definierter Form auf der Oberfläche des Thermoplastkörpers gebildet wird. Grundlage hierfür ist allerdings, dass die Vernetzung des Silikonkautschuks erst dann einsetzt oder abschließt, wenn der Kontakt des Oberfläche des Silikonkautschuks mit der Oberfläche des Thermoplastkörpers bereits hergestellt ist. Aufgrund der erhöhten Temperatur des noch unvernetzten oder nicht vollständig vernetzten Silikonkautschuks kann die Haftverbindung mit dem Thermoplastkörper erst erzeugt werden, da insbesondere die Oberfläche des Thermoplastkörpers durch das heiße Silikonkautschuk leicht angeschmolzen wird, wodurch eine chemische, mechanische und/oder adhäsive Bindung zwischen dem Silikonkautschuk und der Oberfläche des Thermoplastkörpers entsteht. Erst anschließend vernetzt der Silikonkautschuk zum Silikonelastomer.

Kerngedanke der Erfindung ist die einfache und kostengünstige Schaffung eines Verbundbauteils mit einem Thermoplastkörper und mit einem geschäumten Silikonkörper, wobei nach der Bereitstellung des Silikonkautschukes mit dem Treibmittel lediglich noch ein einziger Verfahrensschritt notwendig ist, um das Verbundbauteil zu schaffen. Insbesondere kann der Verbund aus dem Thermoplastkörper und dem geschäumten Silikonkörper ohne Fügeschritt und insbesondere ohne ein Klebemittel oder dergleichen erfolgen. Der besondere Vorteil liegt auch in der Zeitersparnis des Herstellungsverfahrens, da das Aufschäumen, das Vernetzen, das Formgeben und das Anhaften des Silikonkörpers auf der Oberfläche des Thermoplastkörpers gemeinsam mit dem Aufbringen des Silikonkautschukes auf dessen Oberfläche bereits stattfinden kann.

Im Rahmen der Erfindung kann unter einem Gießverfahren jede Art bekannter Urformverfahren verstanden werden, beispielsweise ein Spritzgießen unter Verwendung eines Extruders, mit dem der Silikonkautschuk an den Thermoplastkörper gespritzt wird, was insofern ein Druckverfahren betrifft, es ist aber auch denkbar, dass der Silikonkautuck drucklos an den Thermoplastkörper an- oder aufgegossen wird.

Vorteilhafterweise wird das Aufbringen des Silikonkautschukes mit dem Treibmittel auf der Oberfläche des Thermoplastkörpers mittels eines Anspritzens aus einer Düse oder einer Matrix oder mittels eines Anpressens mittels eines Presswerkzeugs ausgeführt. Beispielsweise kann der Thermoplastkörper nach seiner Herstellung in ein weiteres Werkzeug eingelegt werden, oder ein Werkzeugteil wird nach der Herstellung des Thermoplastkörpers einfach ausgetauscht, sodass eine Kavität zur Bildung des Silikonkörpers gebildet wird. Anschließend kann der Silikonkautschuk gemeinsam mit dem Treibmittel in die verbleibende Kavität so eingespritzt werden, dass der Silikonkautschuk auf der Oberfläche des Thermoplastkörpers aufgebracht, insbesondere aufgespritzt wird. Mit dem anschließenden Schäumen, Vernetzen und Anhaften des Silikonkörpers auf der Oberfläche erfolgt zugleich auch die Formgebung des Silikonkörpers, in dem der vernetzte Silikonkautschuk im Übergang zum Silikonelastomer sich von der Kavität-Form abformt und insofern die Formgebung erfolgen kann.

Alternativ ist es jedoch auch denkbar, dass der Silikonkautschuk gemeinsam mit dem Treibmittel in einer Roh-Form der Kautschukmasse vorliegt und auf die Oberfläche des Thermoplastkörpers gepresst wird. Unter gleichzeitiger Wärmeeinbringung erfolgt sodann das Aufbringen des Silikonkautschukes auf der Oberfläche des Thermoplastkörpers gemeinsam mit dem Aufschäumen, dem Vernetzen, der Formgebung und dem Anhaften auf der Oberfläche des Thermoplastkörpers. Der Silikonkautschuk mit dem Treibmittel, der zunächst in einer Roh-Form vorliegt, muss noch nicht die End-Form des Silikonkörpers aufweisen, diese kann erst anschließend durch eine Abformung vom Presskörper erfolgen.

Im Rahmen der Erfindung kann für das Verfahren insbesondere auch vorgesehen sein, dass der Silikonkautschuk mit dem Treibmittel beim oder während dem Aufbringen auf eine Temperatur von wenigstens 50°C bis maximal 300°C erwärmt wird. Durch die Temperaturführung des Silikonkautschukes mit dem Treibmittel kann die schäumende Wirkung des Treibmittels gesteuert werden, sodass die Aufschäumung beispielsweise erst dann erfolgt, wenn der Silikonkautschuk tatsächlich auf die Oberfläche des Thermoplastkörpers aufgebracht wird, und beispielsweise innerhalb eines Werkzeuges oder einer sonstigen formgebenden Einrichtung aufschäumen soll. Hierfür kann beispielsweise vorgesehen sein, die Werkzeugform insbesondere auch mit dem Thermoplastkörper auf die entsprechende Temperatur zu bringen, wobei es hinreichend ist, lediglich die kontaktierende Oberfläche des Thermoplastkörpers kurzfristig auf die entsprechende Temperatur zu bringen.

Das Treibmittel kann durch ein physikalisch wirkendes Treibmittel gebildet sein, das eine Treibwirkung aufgrund einer Phasenänderung des als Treibmittel wirkenden Stoffes oder Gemisches erzeugt. Beispielsweise kann das Treibmittel bereits nur durch Wasser gebildet sein, das vor dem Aufbringen mit einer Temperatur von unter 100°C und während oder nach dem Aufbringen auf eine Temperatur von über 100°C erhitzt wird, sodass das Wasser verdampft und damit expandiert. Sofern unter höheren oder niedrigeren Drücken des Wassers gearbeitet werden sollte, kann jeweils die druckabhängige Verdampfungstemperatur des Wassers vorgesehen sein, die in an sich bekannter Weise auch von den 100°C abweichen kann, die nur für 1 bar Umgebungsdruck gelten. Erfolgt die Aufbringung des Silikonkautschukes mit dem Treibmittel unter deutlich höheren Drücken, so kann folglich die Temperatur beim Übergang in den schäumenden Raum auch höher liegen, beispielsweise bei 120°C oder 150°C.

Das Treibmittel kann alternativ auch durch ein chemisch wirkendes Treibmittel gebildet werden, das in Form von Pulver oder Granulat zugefügt wird und sich unter Abgabe eines Gases, insbesondere also Kohlendioxid oder beispielsweise auch Stickstoff, zersetzen kann.

Weiterhin ist es denkbar, dass der Silikonkautschuk mit einem Haftvermittler bereitgestellt wird, insbesondere gebildet durch ein Silan, oder es ist vorgesehen, dass der Silikonkautschuk mit Silan vorbehandelt wird. Die aufschäumende Masse kann insofern bestehen aus dem Silikonkautschuk, dem Treibmittel und dem Haftvermittler, wobei auch weitere Bestandteile hierzu denkbar sind.

Es ist auch von Vorteil, die Oberfläche des Thermoplastkörpers vor dem Anspritzen des Silikonkautschukes zu aktiveren, insbesondere mittels einer UV-C Bestrahlung, mittels Flämmen, mittels Silikatisieren, mittels Plasmabeaufschlagung und/oder mittels der Aufbringung eines Primers, um die Anhaftung des Silikonschaumes zu verbessern.

Insbesondere für die Temperaturführung des Silikonkautschukes während oder nach dem Anspritzen auf die Oberfläche des Thermoplastkörpers ist die Charakteristik des Silikonkautschukes von Bedeutung. So kann der Silikonkautschuk mit einer raumtemperatur-vernetzenden Eigenschaft, insbesondere also ein RTV-Silikon (raumtemperatur-vernetzend), oder mit einer hochtemperaturvernetzenden Eigenschaft, insbesondere also ein sogenanntes HTV-Silikon oder als HCR-Silikon (heat cured rubber), bereitgestellt werden und/oder es ist vorgesehen, dass der Silikonkautschuk mittels eines Flüssigsilikonkautschukes, insbesondere eines LSR, gebildet wird.

Zusätzlich zur Temperaturführung während des Aufschäumens kann auch vorgesehen sein, dass das aufgeschäumte Silikonelastomer getempert wird. So kann beispielsweise das Silikonelastomer zur Bildung des Silikonkörpers nach dem Aufschäumen zum Silikonelastomer mittels des Temperns zusätzlich vernetzt werden, insbesondere bei Temperaturen von 50°C bis 250°C. Diese Temperatur kann bis zu einer definierten Dauer gehalten werden, insbesondere bis eine Nachvernetzung abgeschlossen ist, ohne das Silikonelastomer thermisch zu zersetzen.

Im Rahmen der Erfindung ist es auch denkbar, dass das Silikonelastomer zur Bildung des Silikonkörpers nach dem Schäumen mittels eines anschließend aufgebrachten formgebenden Vorgangs behandelt wird, beispielsweise mit einem aufbringbaren Formwerkzeug. Auch ist es denkbar, dass nach dem Schäumen zusätzlich das Silikonelastomer mittels Licht, insbesondere mittels UV-Licht, bestrahlt wird, um eine zusätzliche abschließende Vernetzung zu erzeugen.

Die Erfindung richtet sich auch auf ein Verbundbauteil, das hergestellt ist mit dem vorstehend beschriebenen Verfahren. Das Verbundbauteil kann beispielsweise einen Behälter mit einem Dichtelement bilden, sodass der Thermoplastkörper den Behälter bildet, beispielsweise auch ein Gehäuse oder dergleichen, und es ist ein Dichtelement aus dem Silikonkörper vorgesehen, beispielsweise umlaufend an einer Öffnungsseite des Behälters, sodass das Dichtelement an den Behälter angespritzt wird. Das Dichtelement ist durch die geschäumte Eigenschaft des Silikonkörpers besonders elastisch und kann damit auch eine besonders gute Dichtwirkung erzielen.

Auch ist es denkbar, dass das Verbundbauteil einen Handgriff mit einer Rutschhemmung bildet, sodass der Thermoplastkörper selbst den Handgriff bildet und dass der Silikonkörper eine haptische Rutschhemmung des Handgriffes darstellt.

### BEVORZUGTE AUSFÜHRUNGSBEISPIELE DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Darstellung der Verfahrensschritte zur Bereitstellung eines Ausführungsbeispiels gemäß der Erfindung,
- Figur 2: eine schematische Darstellung des Aufbringens des Silikonkautschukes mit dem Treibmittel auf eine Oberfläche des Thermoplastkörpers,
- Figur 3: ein Ausführungsbeispiel des Verbundbauteils in Form eines Behälters mit einem Dichtelement und
- Figur 4: ein Ausführungsbeispiel des Verbundbauteils als Handgriff mit einer Rutschhemmung.

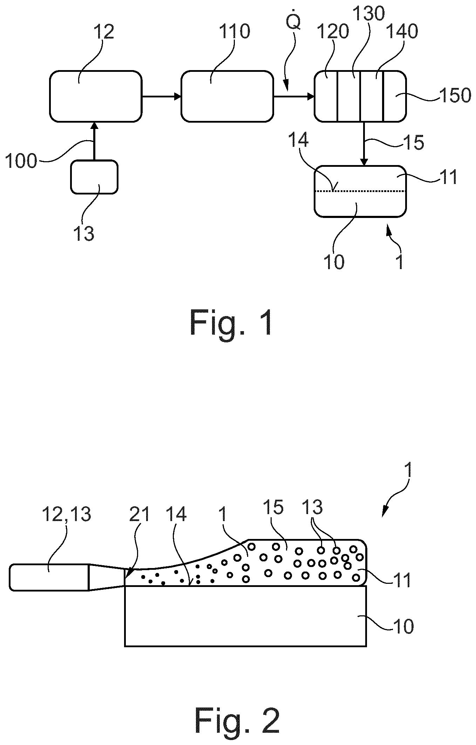

Figur 1 zeigt eine schematische Ansicht des Verfahrens zur Herstellung eines Verbundbauteils 1 mit den Merkmalen der Erfindung. Zunächst wird ein Thermoplastkörper 10 bereitgestellt, der als ein Bestandteil des Verbundbauteils 1 dient. Ferner wird ein Silikonkautschuk 12 bereitgestellt, wobei gemäß dem Verfahrensschritt 100 ein Treibmittel 13 dem Silikonkautschuk 12 zugegeben wird. Die so erzeugte Masse aus dem Silikonkautschuk 12 und dem Treibmittel 13 wird auf eine Oberfläche 14 des Thermoplastkörpers 10 aufgebracht, wobei die Aufbringung mehrere gleichzeitig ablaufende Prozessschritte des Verfahrens umfasst. Das Aufbringen 110 führt dabei zu folgenden Teil-Verfahrensschritten, die gleichzeitig ablaufen: Aufschäumen 120 des Silikonkautschukes 12 mit dem Treibmittel 13 auf der Oberfläche 14 des Thermoplastkörpers 10, Vernetzen 130 des Silikonkautschukes 12 zu einem Silikonelastomer 15, Formgeben 140 des Silikonelastomers 15 und Anhaften 150 des Silikonelastomers 15 auf der Oberfläche 14, sodass ein Silikonkörper mit geschäumter Struktur und definierter Form auf der Oberfläche des Thermoplastkörpers 10 gebildet wird.

Die Grafik macht dabei deutlich, dass die Verfahrensschritte des Aufbringens 110, des Aufschäumens 120, des Vernetzens 130, der Formgebung 140 und dem Anhaften 150 zeitgleich ausgeführt werden. Dabei wird eine Wärmemenge Q (Punkt) in dem Moment in die Masse aus dem Silikonkautschuk und dem Treibmittel eingegeben, in dem diese an die Oberfläche 14 des Thermoplastkörpers 10 aufgebracht wird oder in eine Kavität eingespritzt wird. Dabei kann beispielsweise das Werkzeug selbst die Wärmemenge auf den Silikonkautschuk und das Treibmittel übertragen. Durch die plötzliche Erwärmung des Treibmittels 13 wird dabei die Volumenexpansion erzeugt, sodass das Aufschäumen 120 erfolgt. Zugleich erfolgt aufgrund des Aufschäumens 120 auch die Formgebung 140, beispielsweise indem der Silikonkautschuk 12 in einer Kavität eines Werkzeuges aufschäumt und an dieser geometrisch abformt. Zugleich erfolgt das Vernetzen 130 des Silikonkautschukes 12 zu einem Silikonelastomer 15.

Figur 2 zeigt beispielhaft den Thermoplastkörper 10 mit der Oberfläche 14, auf die der Silikonkautschuk 12 mit dem Treibmittel 13 aufgetragen wird. Der Silikonkautschuk 12 und das Treibmittel 13 können beispielsweise zuvor miteinander vermischt worden sein. Erfährt der Silikonkautschuk 12 und insbesondere das Treibmittel 13 nach Verlassen der düsenartigen Vorrichtung eine plötzliche Erwärmung, kann das Treibmittel 13 aktiviert werden, und es erfolgt eine Volumenexpansion, die durch das Aufdicken des Silikonelastomers 15 beispielhaft gezeigt ist. Das Treibmittel 13 ist ebenfalls beispielhaft als Gasblasen-Struktur dargestellt, sodass nach Erstarren oder Erkalten des so gebildeten Elastomerkörpers 15 der Silikonkörper 11 entsteht. Zugleich erfolgt eine Anhaftung auf der Oberfläche 14 des Thermoplastkörpers 10. Das so hergestellte Verbundbauteil 1 kann beispielsweise im Spritzguss, mit einem Extrusionsvorgang oder auch mit einem Pressvorgang hergestellt werden.

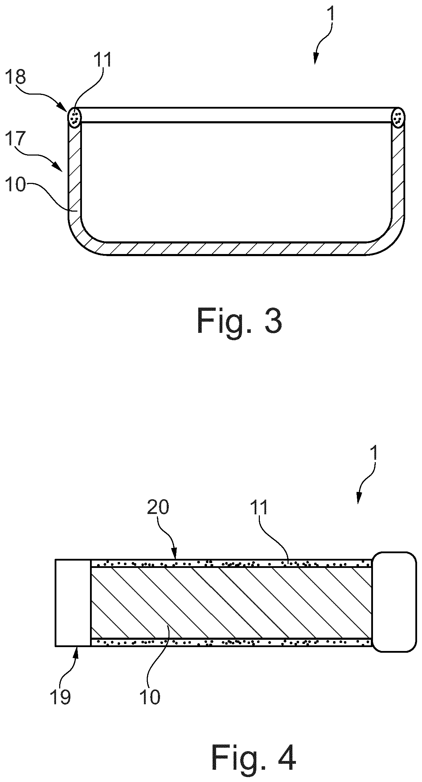

Figur 3 zeigt ein Ausführungsbeispiel des Verbundbauteils 1 als Behälter 17 mit einem Dichtelement 18. Der Behälter 17 wird durch den Thermoplastkörper 10 gebildet, und das Dichtelement 18, das zur Abdichtung eines umlaufenden offenen Randes des Behälters 17 dienen kann, wird durch den Silikonkörper 11 gebildet. Gemäß dem vorstehend beschriebenen Verfahren kann so der Silikonkörper 11 an den Thermoplastkörper 10 angespritzt werden, wobei das Anspritzen unter gleichzeitiger Aufschäumung, einem Vernetzen, einer Formgebung und einem Anhaften auf dem oberen Rand des Behälters 17 erfolgen kann.

Figur 4 zeigt beispielhaft das Verbundbauteil 1 als Handgriff 19 mit einer Rutschhemmung 20. Der Handgriff 19 wird wiederum durch den Thermoplastkörper 10 gebildet, während die Rutschhemmung 20 durch den Silikonkörper 11 gebildet wird.

Beide Ausführungsbeispiele, nämlich der Behälter 17 und der Handgriff 19, können im Spritzguss so hergestellt werden, dass zunächst der Thermoplastkörper 10 hergestellt wird, und anschließend kann der Silikonkörper 11 mit den in Anspruch 1 aufgeführten Teilschritten a) bis d) angebracht werden. Dabei sind selbstverständlich auch weitere Anwendungsfälle denkbar, bei denen häufig der Silikonkörper 11 aufgrund seiner rutschhemmenden Eigenschaft, seiner Elastizität und seiner Formstabilität in Teilbereichen auf der Oberfläche des Thermoplastkörpers 10 aufgebracht wird. So sind neben Dichtelementen 18 oder Rutschhemmungen 20 auch weitere Applikationen für einen Silikonkörper 11 auf einem Grundkörper aus einem Thermoplast denkbar, beispielsweise für medizintechnische Produkte oder auch für sonstige Kunststoffbauteile, bei der eine solche Materialkombination sinnvoll ist, beispielsweise eine Zahnbürste.

Die Erfindung beschränkt sich in ihren Ausführungen nicht auf das vorstehend angegebenen bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichenliste:

- 1: Verbundbauteil
- 10: Thermoplastkörper
- 11: Silikonkörper
- 12: Silikonkautschuk
- 13: Treibmittel
- 14: Oberfläche
- 15: Silikonelastomer
- 16: Haftvermittler
- 17: Behälter
- 18: Dichtelement
- 19: Handgriff
- 20: Rutschhemmung
- 21: düsenartige Vorrichtung
- 100: Einbringen eines Treibmittels in den Silikonkautschuk
- 110: Aufbringen auf eine Oberfläche des Thermoplastkörpers
- 120: Aufschäumen des Silikonkautschukes
- 130: Vernetzen des Silikonkautschukes
- 140: Formgebung des Silikonkautschukes
- 150: Anhaften des Silikonkautschuk auf der Oberfläche
- Q(pkt): Wärmestrom bzw. Wärmemenge

## Patentansprüche

1. Verfahren zur Herstellung eines Verbundbauteils (1) mit einem Thermoplastkörper (10) und mit einem Silikonkörper (11), wobei der Silikonkörper (11) mittels eines Gießvorganges, eines Extrusionsvorganges und/oder eines Pressvorganges verarbeitet wird, wobei das Verfahren wenigstens die folgenden Schritte aufweist:
- Bereitstellen des Thermoplastkörpers (10);
- Bereitstellen von Silikonkautschuk (12);
- Einbringen (100) eines Treibmittels (13) in den Silikonkautschuk (12);
- Aufbringen (110) des Silikonkautschukes (12) mit dem Treibmittel (13) auf eine Oberfläche (14) des Thermoplastkörpers (10), wobei die folgenden Vorgänge mit dem Aufbringen (110) gleichzeitig erfolgen:
a) Aufschäumen (120) des Silikonkautschukes (13) mit dem Treibmittel (13) auf der Oberfläche (14) des Thermoplastkörpers (10),
b) Vernetzen (130) des Silikonkautschukes (12) zu einem Silikonelastomer (15),
c) Formgeben (140) des Silikonelastomers (15) und
d) Anhaften (150) des Silikonelastomers (15) auf der Oberfläche (14), sodass
ein Silikonkörper (11) mit geschäumter Struktur und definierter Form auf der Oberfläche des Thermoplastkörpers (10) gebildet wird.

2. Verfahren nach Anspruch 1,
**dadurch gekennzeichnet,**
**dass** das Aufbringen des Silikonkautschukes (12) mit dem Treibmittel (13) auf eine Oberfläche (14) des Thermoplastkörpers (10) mittels eines Anspritzens aus einer Düse oder Matrix oder mittels eines Anpressens mittels eines Presswerkzeugs ausgeführt wird.

3. Verfahren nach Anspruch 1 oder 2,
**dadurch gekennzeichnet,**
**dass** der Silikonkautschuk (12) mit dem Treibmittel (13) beim oder während dem Aufbringen auf eine Temperatur von wenigstens 50°C bis maximal 300°C erwärmt wird.

4. Verfahren nach einem der Ansprüche 1 bis 3,
**dadurch gekennzeichnet,**
**dass** das Treibmittel (13) durch ein physikalisch wirkendes Treibmittel gebildet wird, das eine Treibwirkung aufgrund einer Phasenänderung des als Treibmittel wirkenden Stoffes erzeugt.

5. Verfahren nach einem der vorgenannten Ansprüche,
**dadurch gekennzeichnet,**
**dass** das Treibmittel (13) durch ein chemisch wirkendes Treibmittel gebildet wird, das in Form von Pulver oder Granulat zugefügt wird und sich unter Abgabe eines Gases, insbesondere Kohlendioxid oder Stickstoff, zersetzt.

6. Verfahren nach einem der vorgenannten Ansprüche,
**dadurch gekennzeichnet,**
**dass** Wasser als Treibmittel (13) verwendet wird, das vor dem Aufbringen mit einer Temperatur von unter 100°C und nach dem Aufbringen auf eine Temperatur von über 100°C erhitzt wird, verdampft und damit expandiert.

7. Verfahren nach einem der vorgenannten Ansprüche,
**dadurch gekennzeichnet,**
**dass** der Silikonkautschuk (12) mit einem Haftvermittler (16) bereitgestellt wird, insbesondere mit einem Silan und/oder dass der Silikonkautschuk (12) mit Silanen vorbehandelt wird.

8. Verfahren nach einem der vorgenannten Ansprüche,
**dadurch gekennzeichnet,**
**dass** die Oberfläche (14) des Thermoplastkörpers (10) vor dem Anspritzen des Silikonkautschukes (12) aktiviert wird, insbesondere mittels einer UV-C Bestrahlung, mittels Flämmen, mittels Silikatisieren, mittels Plasmabeaufschlagung und/oder mittels der Aufbringung eines Primers.

9. Verfahren nach einem der vorgenannten Ansprüche,
**dadurch gekennzeichnet,**
**dass** der Silikonkautschuk (12) mit einer raumtemperatur-vernetzenden Eigenschaft, insbesondere als ein RTV-Silikon, oder mit einer hochtemperaturvernetzenden Eigenschaft, insbesondere als HTV- Silikon oder als HCR-Silikon, bereitgestellt wird und/oder dass der Silikonkautschuk (12) mittels eines Flüssigsilikonkautschukes, insbesondere eines LSR, gebildet wird.

10. Verfahren nach einem der vorgenannten Ansprüche,
**dadurch gekennzeichnet,**
**dass** das Silikonelastomer (15) zur Bildung des Silikonkörpers (11) nach dem Aufschäumen zum Silikonelastomer (15) mittels eines Temperns zusätzlich vernetzt wird, insbesondere bei Temperaturen von 50°C bis 250°C.

11. Verfahren nach einem der vorgenannten Ansprüche,
**dadurch gekennzeichnet,**
**dass** das Silikonelastomer (15) zur Bildung des Silikonkörpers (11) nach dem Schäumen mittels eines formgebenden Vorgangs behandelt wird und/oder nach dem Schäumen zusätzlich mittels Licht, insbesondere mittels UV-Licht, bestrahlt wird, um eine zusätzliche Vernetzung zu erzeugen.

12. Verfahren nach einem der vorgenannten Ansprüche,
**dadurch gekennzeichnet,**
**dass** das Gießverfahren ein Urformverfahren betrifft, insbesondere ein Spritzgießen unter Verwendung eines Extruders oder ein druckloses Angießen oder Aufgießen des Silikonkautschuks (12) an bzw. auf den Thermoplastkörper (10).

13. Verbundbauteil (1) hergestellt mit einem Verfahren nach einem der vorgenannten Ansprüche 1 bis 12.

14. Verbundbauteil (1) nach Anspruch 13,
**dadurch gekennzeichnet,**
**dass** der Thermoplastkörper (10) einen Behälter (17) oder ein Gehäuse bildet und dass der Silikonkörper (11) ein Dichtelement (18) eines Öffnungsrandes des Behälters (17) oder des Gehäuses bildet.

15. Verbundbauteil (1) nach Anspruch 13,
**dadurch gekennzeichnet,**
**dass** der Thermoplastkörper (10) einen Handgriff (19) bildet und dass der Silikonkörper (11) eine haptische Rutschhemmung (20) des Handgriffes (19) bildet.

## Geänderte Patentansprüche

### Geänderte Patentansprüche gemäss Regel 137(2) EPÜ.

1. Verfahren zur Herstellung eines Verbundbauteils (1) mit einem Thermoplastkörper (10) und mit einem Silikonkörper (11), wobei der Silikonkörper (11) mittels eines Gießvorganges, eines Extrusionsvorganges und/oder eines Pressvorganges verarbeitet wird, wobei das Verfahren wenigstens die folgenden Schritte aufweist:
- Bereitstellen des Thermoplastkörpers (10);
- Bereitstellen von Silikonkautschuk (12);
- Einbringen (100) eines Treibmittels (13) in den Silikonkautschuk (12); wobei
- Wasser als Treibmittel (13) bereitgestellt wird, das vor dem Aufbringen mit einer Temperatur von unter 100°C und nach dem Aufbringen auf eine Temperatur von über 100°C erhitzt wird, verdampft und damit expandiert;
- Aufbringen (110) des Silikonkautschukes (12) mit dem Treibmittel (13) auf eine Oberfläche (14) des Thermoplastkörpers (10), wobei die folgenden Vorgänge mit dem Aufbringen (110) gleichzeitig erfolgen:
a) Aufschäumen (120) des Silikonkautschukes (13) mit dem Treibmittel (13) auf der Oberfläche (14) des Thermoplastkörpers (10), indem das Treibmittel (13) durch ein physikalisch wirkendes Treibmittel aus Wasser gebildet wird, das eine Treibwirkung aufgrund einer Phasenänderung des als Treibmittel wirkenden Stoffes erzeugt,
b) Vernetzen (130) des Silikonkautschukes (12) zu einem Silikonelastomer (15),
c) Formgeben (140) des Silikonelastomers (15) und
d) Anhaften (150) des Silikonelastomers (15) auf der Oberfläche (14), sodass
ein Silikonkörper (11) mit geschäumter Struktur und definierter Form auf der Oberfläche des Thermoplastkörpers (10) gebildet wird.

2. Verfahren nach Anspruch 1,
**dadurch gekennzeichnet,**
**dass** das Aufbringen des Silikonkautschukes (12) mit dem Treibmittel (13) auf eine Oberfläche (14) des Thermoplastkörpers (10) mittels eines Anspritzens aus einer Düse oder Matrix oder mittels eines Anpressens mittels eines Presswerkzeugs ausgeführt wird.

3. Verfahren nach Anspruch 1 oder 2,
**dadurch gekennzeichnet,**
**dass** der Silikonkautschuk (12) mit dem Treibmittel (13) beim oder während dem Aufbringen auf eine Temperatur von wenigstens 50°C bis maximal 300°C erwärmt wird.

4. Verfahren nach einem der vorgenannten Ansprüche,
**dadurch gekennzeichnet,**
**dass** der Silikonkautschuk (12) mit einem Haftvermittler (16) bereitgestellt wird, insbesondere mit einem Silan und/oder dass der Silikonkautschuk (12) mit Silanen vorbehandelt wird.

5. Verfahren nach einem der vorgenannten Ansprüche,
**dadurch gekennzeichnet,**
**dass** die Oberfläche (14) des Thermoplastkörpers (10) vor dem Anspritzen des Silikonkautschukes (12) aktiviert wird, insbesondere mittels einer UV-C Bestrahlung, mittels Flämmen, mittels Silikatisieren, mittels Plasmabeaufschlagung und/oder mittels der Aufbringung eines Primers.

6. Verfahren nach einem der vorgenannten Ansprüche,
**dadurch gekennzeichnet,**
**dass** der Silikonkautschuk (12) mit einer raumtemperaturvernetzenden Eigenschaft, insbesondere als ein RTV-Silikon, oder mit einer hochtemperaturvernetzenden Eigenschaft, insbesondere als HTV- Silikon oder als HCR-Silikon, bereitgestellt wird und/oder dass der Silikonkautschuk (12) mittels eines Flüssigsilikonkautschukes, insbesondere eines LSR, gebildet wird.

7. Verfahren nach einem der vorgenannten Ansprüche,
**dadurch gekennzeichnet,**
**dass** das Silikonelastomer (15) zur Bildung des Silikonkörpers (11) nach dem Aufschäumen zum Silikonelastomer (15) mittels eines Temperns zusätzlich vernetzt wird, insbesondere bei Temperaturen von 50°C bis 250°C.

8. Verfahren nach einem der vorgenannten Ansprüche,
**dadurch gekennzeichnet,**
**dass** das Silikonelastomer (15) zur Bildung des Silikonkörpers (11) nach dem Schäumen mittels eines formgebenden Vorgangs behandelt wird und/oder nach dem Schäumen zusätzlich mittels Licht, insbesondere mittels UV-Licht, bestrahlt wird, um eine zusätzliche Vernetzung zu erzeugen.

9. Verfahren nach einem der vorgenannten Ansprüche,
**dadurch gekennzeichnet,**
**dass** das Gießverfahren ein Urformverfahren betrifft, insbesondere ein Spritzgießen unter Verwendung eines Extruders oder ein druckloses Angießen oder Aufgießen des Silikonkautschuks (12) an bzw. auf den Thermoplastkörper (10).

10. Verbundbauteil (1) hergestellt mit einem Verfahren nach einem der vorgenannten Ansprüche 1 bis 9.

11. Verbundbauteil (1) nach Anspruch 10,
**dadurch gekennzeichnet,**
**dass** der Thermoplastkörper (10) einen Behälter (17) oder ein Gehäuse bildet und dass der Silikonkörper (11) ein Dichtelement (18) eines Öffnungsrandes des Behälters (17) oder des Gehäuses bildet.

12. Verbundbauteil (1) nach Anspruch 10,
**dadurch gekennzeichnet,**
**dass** der Thermoplastkörper (10) einen Handgriff (19) bildet und dass der Silikonkörper (11) eine haptische Rutschhemmung (20) des Handgriffes (19) bildet.
